# FASCICULE DE BREVET EUROPEEN

(11) **EP 1 099 195 B1**
(45) Date de publication et mention de la délivrance du brevet: **02.05.2003**
(21) Numéro de dépôt: 98934702.6
(22) Date de dépôt: 17.07.1998
(51) Int. Cl.: G07C 1/10, A61J 7/04, G06F 19/00

(54) **ENREGISTREUR ELECTRONIQUE PORTABLE ET METHODE D'EXPLOITATION DE CET ENREGISTREUR**
TRAGBARE ELEKTRONISCHE AUFZEICHNUNGSVORRICHTUNG UND BETRIEBSVERFAHREN FÜR DIESE AUFZEICHNUNGSVORRICHTUNG
PORTABLE ELECTRONIC RECORDER AND METHOD FOR OPERATING SAME

(43) Date de publication de la demande: 16.05.2001
(73) Titulaire: SYMFO S.A.,, 1180 Bruxelles (BE)
(72) Inventeur: Pornel, Bruno, 1180 Bruxelles (BE)
(74) Mandataire: Van Straaten, Joop
(86) Numéro de dépôt international: BE9800112
(87) Numéro de publication internationale: WO00004509

(56) Documents cités:
- WO-A-96/41242
- WO-A-97/00502
- WO-A-97/08605
- DE-A- 4 443 850
- DE-A- 19 637 383
- US-A- 4 853 854
- US-A- 5 157 640
- US-A- 5 612 869

## Description

### Domaine technique

La présente invention concerne l'enregistrement de données sur les caractéristiques d'événements, en particulier lors de la réalisation d'essais cliniques de médicaments ou d'analyse de comportements humains.

### Art antérieur et critique de cet art antérieur

La collecte des données relatives à la réalisation d'essais cliniques de médicaments ou d'analyse de comportements humains est un problème bien connu de l'industrie pharmaceutique et de toute institution chargée d'analyser des comportements humains. Suivant la méthode utilisée traditionnellement, un centre de recherches cliniques ou une institution chargée d'analyser les comportements humains définit les essais à effectuer, et collecte et analyse les résultats. A cette fin, il diffuse des informations de consigne quant aux intervalles à respecter pour la prise de médicaments et aux symptômes ou événements dont il faut enregistrer le début, la fin et éventuellement l'intensité. Ces données sont transmises à des centres locaux, puis à des médecins ou collaborateurs, qui les communiquent au patients sélectionnés pour faire l'objet des essais cliniques ou d'analyse de comportements humains. Les patients reçoivent pour instruction de respecter une posologie de prise d'un ou plusieurs médicaments, et d'enregistrer le début et la fin de l'occurrence d'un ensemble de symptômes prédéterminés, ou d'événements particuliers, pendant des périodes pouvant aller jusqu'à plusieurs mois. Ce processus d'enregistrement de données est réalisé au moyen d'un ensemble de documents, tels que des carnets de notes et des fiches, remplis et validés par les patients concernés, vérifiés par les médecins, vérifiés à nouveau par les centres locaux, puis transmis au centre de recherches cliniques. Ceux-ci sont alors en mesure de faire les analyses statistiques requises.

Un tel processus présente de nombreux inconvénients. Un inconvénient majeur est le manque de fiabilité de l'enregistrement des données fait par le patient. Des données incomplètes doivent, si possible, être complétées par le médecin, le collaborateur ou le centre local, ou rejetées. Le patient devrait porter en permanence son carnet ou sa fiche d'enregistrement sur lui de manière à pouvoir y consigner les événements requis immédiatement lors de leur occurrence. Cependant, rien ne l'oblige à agir de la sorte, et il peut se borner à consigner un ensemble d'événements a posteriori. On comprendra aisément qu'une telle façon de procéder augmente sensiblement le risque d'oublis et d'imprécisions. De plus, lors du traitement de ces données, il n'est pas possible de déterminer si leur enregistrement a été effectué immédiatement ou a posteriori. Il n'est donc pas possible de juger de la qualité des données collectées.

Un autre inconvénient de la méthode suivant l'art antérieur est le manque de confidentialité. Les données consignées par écrit peuvent être vues par des personnes non autorisées.

Enfin, cette méthode requiert un encodage de données. Cet encodage est coûteux, augmente le délai de collecte de données, nécessite presque toujours des corrections et est une source additionnelle d'erreurs et d'omissions.

Il existe de nombreux types de dispositifs permettant d'assister le patient dans le respect dune posologie. On connaît par exemple par US 5,706,257 un dispositif produisant un signal sonore lorsque l'instant prévu de prise de médicament survient. Une touche permet alors à l'utilisateur d'indiquer qu'il a effectué la prise de médicament, et d'arrêter ainsi le signal sonore. Le document US 5,554,967 décrit un appareil semblable, au format d'une carte de crédit. Le document US 5,623,242 décrit un appareil capable de recevoir les instructions de prise de médicament par une liaison radio de type "recherche de personnes". Ces appareils sont portables. Certains d'entre eux, tel celui décrit dans US 5,495,961, permettent le téléchargement de données de consigne à partir d'un ordinateur. Ils peuvent rendre de grands services en aidant le patient à respecter une posologie prescrite. Aucun d'entre eux ne permet cependant ni la collecte de données concernant des symptômes observés, ni le téléchargement de ces données vers un ordinateur.

Le document US 5,691,932 décrit un système de collecte de données et de rappel pour le suivi de nouveaux-nés. Le dispositif permet la collecte de données concernant des événements spéeifiques tels que l'alimentation, la croissance et l'apprentissage. Il permet le téléchargement à partir d'un ordinateur de données telles que les intervalles de prises de médicaments et les rappels à effectuer. Il permet également le téléchargement des données enregistrées vers un ordinateur en vue de leur traitement. Ce dispositif est cependant conçu pour un usage spécifique en pédiatrie. Il ne permet pas la programmation de campagnes d'essais cliniques ou d'analyse de comportements humains paramétrables et généraux. Il ne comprend pas de moyens permettant d'assurer la fiabilité des données enregistrées.

On connaît par DE 4 443 850 A1 un dispositif pour l'enregistrement d'activités ou de données concernant des projets. Ce dispositif ne comporte cependant pas de moyens pour signaler à l'utilisateur qu'une action doit être entreprise.

### But de l'invention

La présente invention a pour but de fournir un dispositif et une méthode d'enregistrement de caractéristiques d'événements qui permettent d'obtenir des données plus fiables et plus complètes que celles obtenues par la méthode utilisée traditionnellement.

### Description

L'invention a pour objet un dispositif d'enregistrement d'événements comportant des moyens aptes à donner des commandes au dit dispositif, des moyens aptes à émettre des signaux et une mémoire apte à mémoriser les commandes données au dit dispositif. Les moyens aptes à donner des commandes au dit dispositif comportent un premier moyen apte à donner une commande d'enregistrement du début d'un événement et un second moyen apte à donner une commande d'enregistrement de la fin d'un événement. Le dispositif comporte des moyens aptes à provoquer un signal de rappel qu'un événement est en cours, le dit signal étant activé par le dit premier moyen et désactivé par le dit second moyen. Le dispositif comporte encore des moyens aptes à mémoriser la date et l'heure de début et de fin de l'événement dans la mémoire.

Le dispositif peut également comporter un moyen apte à donner des commandes d'enregistrement de l'occurrence d'un événement ponctuel et des moyens aptes à mémoriser la date et l'heure de cet événement dans la mémoire. Il comporte des moyens de aptes à commander une sélection d'un type d'événement dans un ensemble de types d'événements, des moyens aptes à provoquer un signal de rappel qu'une sélection doit être effectuée, le dit signal pouvant être activé par le second moyen apte à donner une commande d'enregistrement de la fin d'un événement ou par le moyen apte à donner des commandes d'enregistrement de l'occurrence d'un événement ponctuel, et des moyens aptes à mémoriser le type de l'événement sélectionné dans la mémoire.

Il peut comporter des moyens aptes à commander une sélection de la valeur d'une caractéristique d'un événement dans un ensemble de valeurs de caractéristiques, des moyens aptes à provoquer un signal de rappel qu'une sélection doit être effectuée, le dit signal pouvant être activé par le second moyen apte à donner une commande d'enregistrement de la fin d'un événement ou par le moyen apte à donner des commandes d'enregistrement de l'occurrence d'un événement ponctuel, ou encore par les moyens aptes à commander une sélection d'un type d'événement, et des moyens aptes à mémoriser la valeur de la caractéristique de l'événement.

Il peut comporter des moyens aptes à rappeler à l'utilisateur qu'une action doit être effectuée.

Il peut comporter des moyens aptes à télécharger dans sa mémoire des données provenant d'un ordinateur et définissant la campagne d'essais à réaliser, et à télécharger les résulats de ces essais enregistrés dans sa mémoire vers le dit ordinateur.

Les moyens aptes à donner des commandes au dit dispositif peuvent comporter des boutons-poussoirs. Ceux-ci peuvent comporter des moyens aptes à ne donner des commandes au dit dispositif gu'à la suite d'un multiple (par exemple double) appui, à bref délai, afin d'éviter des enregistrements accidentels.

Les moyens aptes à donner des commandes au dit dispositif peuvent également comporter des moyens de reconnaissance vocale.

Les moyens aptes à émettre des signaux peuvent comporter des moyens aptes à émettre des tonalités, des signaux lumineux, ou des moyens de synthèse vocale.

Les moyens aptes à commander une sélection d'un type d'événement ou de la valeur d'une caractéristique d'un événement peuvent comporter un écran d'affichage ou des moyens de synthèse vocale.

L'invention a également pour objet une méthode de collecte de données d'une campagne d'essais cliniques ou d'analyse de comportements humains, des premières données définissant un ensemble de types d'événements à enregistrer, un ensemble des valeurs possibles d'une ou plusieurs caractéristiques associées à chacun de ces types d'événements, et un ensemble d'actions particulières à effectuer à des instants déterminés, ces premières données ayant été élaborées par un centre de recherches cliniques ou d'analyse de comportements humains, caractérisée en ce qu'elle comporte les étapes suivantes
- transfert de ces premières données, à travers des centre locaux, vers les ordinateurs des médecins ou des collaborateurs;
- téléchargement de ces premières données vers des dispositifs suivant l'une quelconque des revendications;
- enregistrement de deuxièmes données consistant en des dates et heures de début et fin ou d'occurrence des événements observés, avec leurs types et la valeur de leurs caractéristiques par des dispositifs suivant l'une quelconque des revendications;
- téléchargement des dites deuxièmes données enregistrées vers les ordinateurs des médecins ou des collaborateurs;
- transfert de ces deuxièmes données enregistrées, à travers des centres locaux, vers le centre de recherches cliniques ou d'analyse de comportements humains;
- traitement de ces deuxièmes données par le centre de recherches cliniques ou d'analyse de comportements humains.

### Description des figures

D'autres caractéristiques et avantages de l'invention apparaitront à la lecture de la description qui suit, référence étant faite aux figures annexées.

La figure 1 est une vue de face d'un dispositif d'enregistrement d'événements suivant un mode d'exécution de l'invention.

La figure 2 est une vue arrière d'un tel dispositif.

La figure 3 représente un exemple d'affichage .

La figure 4 représente un ensembles des éléments graphiques pouvant apparaître sur un écran d'un tel dispositif.

La figure 5 est une représentation schématique d'une méthode suivant l'invention de réalisation d'essais cliniques.

### Description détaillée de modes de réalisation

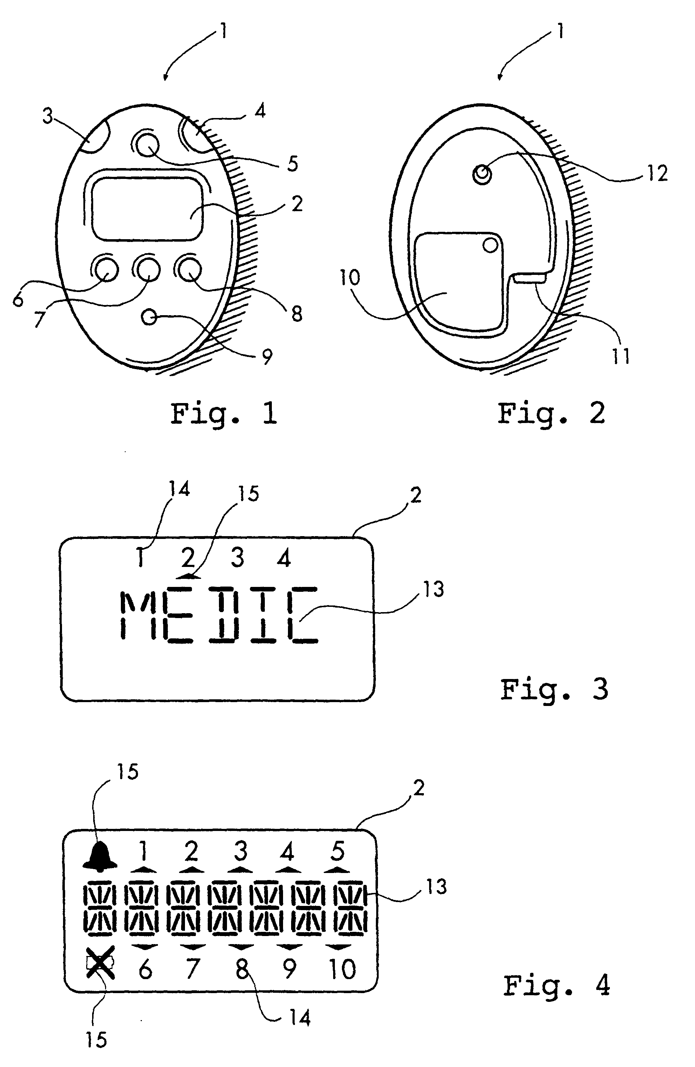

La figure 1 montre un dispositif 1 d'enregistrement d'événements suivant une forme d'exécution de l'invention. Celui-ci comporte un écran d'affichage 2 qui permet d'afficher un ensemble de caractères alphanumériques ou d'icones. Cet écran d'affichage 2 peut, par exemple, étre de type LCD (Liquid Cristal Display) et comporter des moyens d'éclairage. Le dispositif 1 comporte des boutons principaux supérieurs gauche 3 et droit 4 permettant respectivement de donner les commandes d'enregistrement du début et de la fin d'un événement. Un bouton secondaire médian supérieur 5 permet de donner la commande d'enregistrement de l'occurrence d'un événement ponctuel. Des boutons secondaires gauche 6 et droit 8 permettent de sélectionner un élément dans une liste affichée à l'écran 2 et le bouton secondaire médian inférieur 7 permet de valider la sélection effectuée. Un générateur de signal sonore 9 tel qu'un buzzer permet de faire entendre un ou plusieurs types de tonalités.

La figure 2 est une vue arrière du dispositif 1. Un clapet 10 permet l'accès à une pile. Une prise 11 permet l'insertion d'un connecteur établissant une liaison série avec un ordinateur. Un point d'attache 12 permet de fixer au dispositif 1 une agrafe amovible ou un cordon, permettant ainsi de porter le dispositif à une ceinture, ou en pendentif. La forme et les dimensions du dispositif 1 sont tels que celui-ci peut aisément être porté à tout instant, et en toute circonstance, sans que cela constitue une gêne. L'utilisateur peut donc avoir le dit dispositif 1 en permanence à portée de la main. On accroît ainsi sensiblement la fiabilité des données enregistrées par le dispositif 1.

La figure 3 représente un exemple d'affichage. Dans cet exemple, un message alphanumérique 13 indique à l'utilisateur qu'il doit prendre un médicament, et indique, par une flèche 15, dans une liste 14, lequel d'entre eux doit être pris. Les messages affichés peuvent être adaptés à la langue de l'utilisateur.

La figure 4 représente l'ensemble des éléments pouvant être affichés sur l'écran 2. On pourra bien sûr, sans sortir du cadre de l'invention, réaliser d'autres ensembles d'éléments affichables. On pourra par exemple utiliser un écran affichable point par point.

Le dispositif 1 comprend, comme des dispositifs connus de l'art antérieur cités ci-dessus, une fonctionnalité de rappel, auditif et/ou visuel, qu'une action, telle que la prise d'un médicament, doit être effectuée. Ce rappel comporte l'indication de l'action à effectuer, par exemple 'MEDIC' et de la nature ou la dose du médicament à prendre.

L'utilisation du dispositif 1 comporte un ensemble de procédures par lesquelles l'enregistrement de données est rendu plus fiable.

Afin d'éviter l'enregistrement accidentel d'événements, par exemple lorsque le dispositif 1 se trouve dans une poche de l'utilisateur, l'appui sur un touche provoquant un enregistrement doit être exécuté deux fois, à bref délai, par exemple en moins d'une seconde, pour être accepté. En outre, une tonalité d'acquit, propre à la procédure en cours, informe l'utilisateur que sa commande a bien été exécutée.

Une procédure décrite ci-après permet d'enregistrer un événement prolongé, tel qu'un symptôme (exemples: céphalées, crampes, bouffées de chaleur). Lorsqu'un tel événement survient, l'utilisateur appuie deux fois, à bref délai, sur le bouton principal supérieur gauche 3. Le dispositif 1 émet une tonalité simple, mémorise la date et l'heure de début, et affiche sur l'écran 2, en alternance, un message tel que 'EVENT' ou 'SYMTOM' et l'heure. La liste des événements possibles est affichée au dessus et en dessous de ce message. Lorsque cet événement disparaît, l'utilisateur appuie deux fois, à bref délai, sur le bouton principal supérieur droit 4. Le dispositif 1 mémorise alors la date et l'heure de fin, et entre dans la procédure de sélection du type d'événement et de sa ou ses caractéristiques décrite ci-après. Entre l'enregistrement du début et de la fin de l'événement, un signal rappelle périodiquement à l'utilisateur que l'enregistrement d'un événement est en cours. Si après un délai paramétrable, par exemple de trois heures, la fin de l'événement n'a pas été enregistrée, le dispositif clôture l'événement automatiquement, et mémorise que cette fin n'a pas été validée.

Une procédure semblable à celle décrite ci-dessus permet l'enregistrement d'événements ponctuels, tels que la prise d'un médicament, le lever, le coucher ou une prise de sang. Lorsqu'un tel événement survient, l'utilisateur appuie deux fois, à bref délai, sur le bouton secondaire médian supérieur 5. Le dispositif 1 émet une tonalité simple, mémorise la date et l'heure de l'événement, et entre dans la procédure de sélection du type d'événement et de sa ou ses caractéristiques décrit ci-après.

Les procédures de sélection du type d'événement et de sa ou ses caractéristiques décrites ci-dessous s'applique tant aux événements prolongés qu'aux événements ponctuels. Lorsque un événement prolongé ou ponctuel a été enregistré, l'utilisateur sélectionne, dans la liste affichée, au moyen des boutons secondaires gauche 6 et droit 8 le type d'événement approprié, puis valide son choix par appui double, à bref délai, sur le bouton secondaire médian inférieur 7. Il fait ensuite de même pour la ou les caractéristiques (exemple: légère, moyenne, forte) de l'événement considéré. L'écran 2 affiche alors en alternance une message tel que 'VALID', et un message tel que 'YES + flèche vers le bas / NO flèche vers le haut'. L'utilisateur appuie alors deux fois, à bref délai, sur le bouton secondaire médian inférieur 7 pour valider et sur le bouton secondaire supérieur 5 pour invalider son choix. Dans le cas où l'utilisateur valide son choix, les données sont mémorisées. Dans le cas où l'utilisateur invalide son choix, une deuxième confirmation lui est demandée, et les données ne sont pas enregistrées. Tant que la validation n'est pas effectuée, un signal périodique de rappel est émis par le dispositif 1. Lors du parcours de la liste numérique d'éléments à sélectionner, l'écran peut afficher, dans la langue de l'utilisateur, le nom abrégé du symptôme ou de la caractéristique.

Certaines campagnes d'essais ne peuvent prévoir qu'un seul type d'événement prolongé, ou qu'un seul type d'événement ponctuel. Certains événements peuvent ne pas requérir l'enregistrement d'une caractéristique. Dans ces cas, les procédures de sélection du type d'événement et de sa ou ses caractéristiques ci-dessus ne seront pas activées. Seule la validation finale sera effectuée.

Afin d'assurer que le dispositif 1 est bien conservé à portée de main par l'utilisateur, une procédure de validation de port du dispositif 1 est prévue. Dans l'exemple décrit, cette validation est effectuée par double appui, à bref délai, sur les boutons secondaires 6, 7 et 8, et est suivie d'une double tonalité d'acquit. Une telle validation peut être faite par l'utilisateur, à son initiative, ou être demandée, au moyen d'un rappel, par le dispositif, à des instants prédéterminés ou aléatoires.

L'intensité des tonalités émises par le dispositif 1 peut être sélectionnée par l'utilisateur.

Une indication visuelle et auditive indique à l'utilisateur, dans une délai suffisant, par exemple de 15 jours, que la pile du dispositif 1 doit être remplacée.

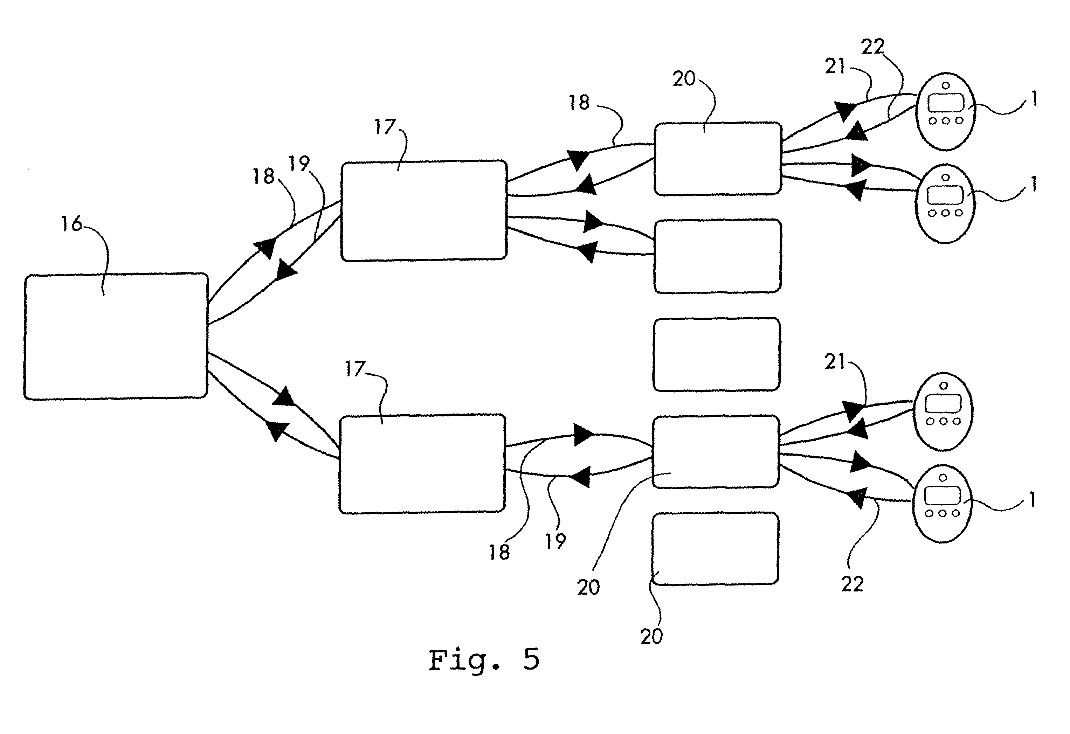

La figure 5 montre schématiquement les étapes d'une méthode de réalisation de campagnes d'essais tels que des essais cliniques ou d'analyse du comportement humain. L'élaboration du programme d'essais par un centre de recherches 16 peut comporter la définition de la liste des type d'événements à enregistrer, de la liste des caractéristiques de chacun de ces types d'événements et de leurs valeurs possibles. Ce programme est alors envoyé 18 à des centres locaux 17, puis vers les ordinateurs 20 de médecins ou collaborateurs, par envoi de disquettes ou par un réseau. Les médecin ou le collaborateurs téléchargent alors les données appropriées dans les dispositifs 1 qui lui sont confiés pour chacun de leurs utilisateurs ou patients. A l'issue de la campagne d'essais, les résultats sont téléchargés, à partir de la mémoire des dispositifs, vers les ordinateurs 20, où ils peuvent faire l'objet d'un premier rapport. Ils sont ensuite envoyés 19 vers les centres locaux 17 puis vers le centre de recherches 16, ou ils sont exploités et analysés.

Cette méthode ne diffère de la méthode traditionnelle que par l'emploi des dispositifs 1 d'enregistrement. L'usage de ceux-ci permet cependant de collecter des données d'une fiabilité bien meilleure, et d'éviter ainsi de nombreuses vérifications et tentatives de corriger des erreurs ou des oublis. Un encodage de données à partir de données sur papier n'est plus nécéssaire, ce qui permet un gain de temps et élimine une source d'erreurs. Un mécanisme d'encrytptage des données permet d'en garantir la confidentialité et de ne donner accès aux données qu'aux personnes autorisées. Un numéro d'identification, propre à chacun des dispositifs 1 permet d'authentifier la provenance des données.

L'ensemble de ces caractéristiques confère aux résultats des essais réalisés au moyen d'un dispositif 1 et de la méthode suivant l'invention une valeur accrue par rapport à ceux obtenus par une méthode traditionnelle.

## Revendications

1. Dispositif d'enregistrement d'événements (1) comportant
- des moyens (3,4,6,7,8,5) aptes à donner des commandes au dit dispositif (1);
- des moyens aptes à émettre des signaux (9);
- une mémoire apte à mémoriser les commandes données au dit dispositif (1);
**caractérisé en ce que** les moyens aptes à donner des commandes au dit dispositif comportent un premier moyen (3) apte à donner une commande d'enregistrement du début d'un événement et un second moyen (4) apte à donner une commande d'enregistrement de la fin d'un événement,
que le dispositif comporte des moyens aptes à provoquer un signal de rappel qu'un événement est en cours, le dit signal étant activé par le dit premier moyen (3) et désactivé par le dit second moyen (4);
et que le dispositif comporte des moyens aptes à mémoriser la date et l'heure de début et de fin de l'événement dans la mémoire.

2. Dispositif (1) suivant la revendication 1, **caractérisé en ce qu'**il comporte un moyen (5) apte à donner des commandes d'enregistrement de l'occurrence d'un événement ponctuel et des moyens aptes à mémoriser la date et l'heure de cet événement dans la mémoire.

3. Dispositif (1) suivant l'une quelconque des revendications précédentes, **caractérisé en ce qu'**il comporte des moyens de (2,6,7,8) aptes à commander une sélection d'un type d'événement dans un ensemble de types d'événements, des moyens aptes à provoquer un signal de rappel qu'une sélection doit être effectuée, le dit signal pouvant être activé par le second moyen (4) apte à donner une commande d'enregistrement de la fin d'un événement ou par le moyen (5) apte à donner des commandes d'enregistrement de l'occurrence d'un événement ponctuel, et des moyens aptes à mémoriser le type de l'événement sélectionné dans la mémoire.

4. Dispositif (1) suivant l'une quelconque des revendications précédentes, **caractérisé en ce qu'**il comporte des moyens (2,6,7,8) aptes à commander une sélection de la valeur d'une caractéristique d'un événement dans un ensemble de valeurs de caractéristiques, des moyens aptes à provoquer un signal de rappel qu'une sélection doit être effectuée, le dit signal pouvant être activé par le second moyen (4) apte à donner une commande d'enregistrement de la fin d'un événement ou par le moyen (5) apte à donner des commandes d'enregistrement de l'occurrence d'un événement ponctuel, ou encore par les moyens (2,6,7,8) aptes à commander une sélection d'un type d'événement, et des moyens aptes à mémoriser la valeur de la caractéristique de l'événement.

5. Dispositif (1) suivant l'une quelconque des revendications précédentes, **caractérisé en ce qu'**il comporte des moyens (2,9) aptes à rappeler à l'utilisateur qu'une action doit être effectuée.

6. Dispositif (1) suivant l'une quelconque des revendications précédentes, **caractérisé en ce qu'**il comporte des moyens (11) aptes à télécharger dans sa mémoire des données provenant d'un ordinateur (20) et définissant la campagne d'essais à réaliser, et à télécharger les résulats de ces essais enregistrés dans sa mémoire vers le dit ordinateur (20).

7. Dispositif (1) suivant l'une quelconque des revendications précédentes, **caractérisé en ce que** les moyens (3,4,6,7,8,5) aptes à donner des commandes au dit dispositif (1) comportent des boutons-poussoirs.

8. Dispositif (1) suivant la revendication 7 **caractérisé en ce que** les boutons-poussoirs (3,4,6,7,8,5) comportent des moyens aptes à ne donner des commandes au dit dispositif (1) qu'à la suite d'un multiple appui, à bref délai.

9. Dispositif (1) suivant l'une quelconque des revendications précédentes, **caractérisé en ce que** les moyens (3,4,6,7,8,5) aptes à donner des commandes au dit dispositif (1) comportent des moyens de reconnaissance vocale.

10. Dispositif (1) suivant l'une quelconque des revendications précédentes, **caractérisé en ce que** les moyens aptes à émettre des signaux (9) comportent des moyens aptes à émettre des tonalités.

11. Dispositif (1) suivant l'une quelconque des revendications précédentes, **caractérisé en ce que** les moyens aptes à émettre des signaux (9) comportent des moyens aptes à émettre des signaux lumineux.

12. Dispositif (1) suivant l'une quelconque des revendications précédentes, **caractérisé en ce que** les moyens aptes à émettre des signaux (9) comportent des moyens de synthèse vocale.

13. Dispositif (1) suivant l'une quelconque des revendications précédentes, **caractérisé en ce que** les moyens (2,6,7,8) aptes à commander une sélection d'un type d'événement ou de la valeur d'une caractéristique d'un événement comportent un écran d'affichage (2).

14. Dispositif (1) suivant l'une quelconque des revendications précédentes, **caractérisé en ce que** les moyens (2,6,7,8) aptes à commander une sélection d'un type d'événement ou de la valeur d'une caractéristique d'un événement comportent des moyens de synthèse vocale.

15. Méthode de collecte de données d'une campagne d'essais cliniques ou d'analyse de comportements humains, des premières données définissant un ensemble de types d'événements à enregistrer, un ensemble des valeurs possibles d'une ou plusieurs caractéristiques associées à chacun de ces types d'événements, et un ensemble d'actions particulières à effectuer à des instants déterminés, ces premières données ayant été élaborées par un centre de recherches cliniques ou d'analyse de comportements humains (16), **caractérisée en ce qu'**elle comporte les étapes suivantes
- transfert (18) de ces premières données, à travers des centres locaux (17), vers les ordinateurs (20) des médecins ou des collaboratéurs ;
- téléchargement (21) de ces premières données vers des dispositifs (1) suivant l'une quelconque des revendications 1 à 14 ;
- enregistrement de deuxièmes données consistant en des dates et heures des début et fin ou des occurrences des événements observés, avec leurs types et la valeur de leurs caractéristiques par des dispositifs suivant l'une quelconque des revendications 1 à 14 ;
- téléchargement (22) des dites deuxièmes données enregistrées vers les ordinateurs (20) des médecins ou des collaborateurs;
- transfert (19) de ces deuxièmes données enregistrées, à travers des centre locaux (17), vers le centre de recherches cliniques ou d'analyse de comportements humains (16) ;
- traitement de ces deuxièmes données par le centre de recherches cliniques ou d'analyse de comportements humains (16).

## Claims

1. Device for recording events (1) comprising:
- means (3, 4, 6, 7, 8, 5) for giving commands to the said device (1);
- means for emitting signals (9);
- a memory for storing the commands given to the said device (1);
**characterized in that** the means for giving commands to the said device comprise a first means (3) for giving a command for recording the start of an event and a second means (4) for giving a command for recording the end of an event,
**in that** the device comprises means for triggering a signal as a reminder that an event is in progress, the said signal being activated by the said first means (3) and deactivated by the said second means (4);
and **in that** the device comprises means for storing the date and time of the start and end of the event in the memory.

2. Device (1) according to Claim 1, **characterized in that** it comprises a means (5) for giving commands for recording the occurrence of an isolated event and means for storing the date and time of this event in the memory.

3. Device (1) according to either of the preceding claims, **characterized in that** it comprises means (2, 6, 7, 8) for commanding the selection of a type of event from a set of types of events, means for triggering a signal as a reminder that a selection is to be made, the said signal being able to be activated by the second means (4) for giving a command for recording the end of an event or by the means (5) for giving commands for recording the occurrence of an isolated event, and means for storing the selected type of event in the memory.

4. Device (1) according to any of the preceding claims, **characterized in that** it comprises means (2, 6, 7, 8) for commanding the selection of the value of a characteristic of an event from a set of values of characteristics, means for triggering a signal as a reminder that a selection is to be made, the said signal being able to be activated by the second means (4) for giving a command for recording the end of an event or by the means (5) for giving commands for recording the occurrence of an isolated event, or by the means (2, 6, 7, 8) for commanding the selection of a type of event, and means for storing the value of the characteristic of the event.

5. Device (1) according to any of the preceding claims, **characterized in that** it comprises means (2, 9) for reminding the user that an action is to be taken.

6. Device (1) according to any of the preceding claims, **characterized in that** it comprises means (11) for downloading, into its memory, data originating from a computer (20) and defining the campaign of trials to be conducted, and for downloading the results of these trials, recorded in its memory, to the said computer (20).

7. Device (1) according to any of the preceding claims, **characterized in that** the means (3, 4, 6, 7, 8, 5) for giving commands to the said device (1) comprise push-buttons.

8. Device (1) according to Claim 7, **characterized in that** the push-buttons (3, 4, 6, 7, 8, 5) comprise means ensuring that commands are given to the said device (1) only following a number of presses in quick succession.

9. Device (1) according to any of the preceding claims, **characterized in that** the means (3, 4, 6, 7, 8, 5) for giving commands to the said device (1) comprise voice recognition means.

10. Device (1) according to any of the preceding claims, **characterized in that** the means for emitting signals (9) comprise means for emitting tones.

11. Device (1) according to any of the preceding claims, **characterized in that** the means for emitting signals (9) comprise means for emitting light signals.

12. Device (1) according to any of the preceding claims, **characterized in that** the means for emitting signals (9) comprise voice synthesis means.

13. Device (1) according to any of the preceding claims, **characterized in that** the means (2, 6, 7, 8) for commanding the selection of a type of event or of the value of a characteristic of an event comprise a display screen (2).

14. Device (1) according to any of the preceding claims, **characterized in that** the means (2, 6, 7, 8) for commanding the selection of a type of event or of the value of a characteristic of an event comprise voice synthesis means.

15. Method for conducting a campaign of clinical trials or analysis of human behaviour, **characterized in that** it comprises the following steps:
- setting-up, by a clinical research centre or centre for analysis of human behaviour (16), of data defining a set of types of events to be recorded, a set of the possible values of one or more characteristics associated with each of these types of events, and a set of particular actions to be taken at specified moments;
- transfer (18) of these data, through local centres (17), to the computers (20) of doctors or of associates;
- downloading (21) these data to devices (1) according to any of Claims 1 to 14;
- recording the dates and times of the start and end or occurrence of the events observed, with their types and the value of their characteristics with devices according to any of the claims 1 to 14;
- downloading (22) the said recorded data to the computers (20) of the doctors or associates;
- transfer (19) of these data, through local centres (17), to the clinical research centre or centre for analysis of human behaviour (16);
- processing of these data by the clinical research centre or the centre for analysis of human behaviour (16).

## Patentansprüche

1. Vorrichtung zur Aufzeichnung von Ereignissen (1), umfassend
- Mittel (3, 4, 6, 7, 8, 5), die in der Lage sind, der Vorrichtung (1) Befehle zu erteilen;
- Mittel, die in der Lage sind, Signale (9) zu entsenden;
- einen Speicher, der in der Lage ist, die Befehle zu speichern, die der Vorrichtung (1) erteilt werden;
**dadurch gekennzeichnet, dass** die Mittel, die in der Lage sind, der Vorrichtung Befehle zu erteilen, ein erstes Mittel (3), das in der Lage ist, einen Aufzeichnungsbefehl für den Beginn eines Ereignisses zu erteilen, und ein zweites Mittel (4) umfassen, das in der Lage ist, einen Aufzeichnungsbefehl für das Ende eines Ereignisses zu erteilen;
dass die Vorrichtung Mittel umfasst, die in der Lage sind, ein Erinnerungssignal, dass ein Ereignis gerade stattfindet, hervorzurufen, wobei dieses Signal durch das erste Mittel (3) aktiviert und durch das zweite Mittel (4) deaktiviert wird;
und dass die Vorrichtung Mittel umfasst, die in der Lage sind, das Datum und die Uhrzeit des Beginns und des Endes des Ereignisses im Speicher zu speichern.

2. Vorrichtung (1) nach Anspruch 1, **dadurch gekennzeichnet, dass** sie ein Mittel (5), das in der Lage ist, Aufzeichnungsbefehle für das Eintreten eines punktuellen Ereignisses zu erteilen, und Mittel umfasst, die in der Lage sind, das Datum und die Uhrzeit dieses Ereignisses im Speicher zu speichern.

3. Vorrichtung (1) nach einem der vorhergehenden Ansprüche, **dadurch gekennzeichnet, dass** sie Mittel (2, 6, 7, 8), die in der Lage sind, eine Auswahl eines Ereignistyps in einer Gesamtheit von Ereignistypen zu steuern, Mittel, die in der Lage sind, ein Erinnerungssignal, dass eine Auswahl zu treffen ist, hervorzurufen, wobei dieses Signal durch das zweite Mittel (4), das in der Lage ist, einen Aufzeichnungsbefehl für das Ende eines Ereignisses zu erteilen, oder durch das Mittel (5) aktiviert werden kann, das in der Lage ist, Aufzeichnungsbefehle für das Eintreten eines punktuellen Ereignisses zu erteilen, und Mittel umfasst, die in der Lage sind, den in dem Speicher ausgewählten Ereignistyp zu speichern.

4. Vorrichtung (1) nach einem der vorhergehenden Ansprüche, **dadurch gekennzeichnet, dass** sie Mittel (2, 6, 7, 8), die in der Lage sind, eine Auswahl des Wertes eines Merkmals eines Ereignisses in einer Gesamtheit von Werten von Merkmalen zu steuern, Mittel, die in der Lage sind, ein Erinnerungssignal, dass eine Auswahl zu treffen ist, hervorzurufen, wobei dieses Signal durch das zweite Mittel (4), das in der Lage ist, einen Aufzeichnungsbefehl für das Ende eines Ereignisses zu erteilen, oder durch das Mittel (5), das in der Lage ist, Aufzeichnungsbefehle für das Eintreten eines punktuellen Ereignisses zu erteilen, oder auch durch die Mittel (2, 6, 7, 8) aktiviert werden kann, die in der Lage sind, eine Auswahl eines Ereignistyps zu steuern, und Mittel umfasst, die in der Lage sind, den Wert des Merkmals des Ereignisses zu speichern.

5. Vorrichtung (1) nach einem der vorhergehenden Ansprüche, **dadurch gekennzeichnet, dass** sie Mittel (2, 9) umfasst, die in der Lage sind, den Benutzer daran zu erinnern, dass eine Aktion durchzuführen ist.

6. Vorrichtung (1) nach einem der vorhergehenden Ansprüche, **dadurch gekennzeichnet, dass** sie Mittel (11) umfasst, die in der Lage sind, in ihrem Speicher Daten fern zu laden, die von einem Computer (20) stammen und die durchzuführende Versuchsreihe definieren, und die Ergebnisse dieser Versuche, die in ihrem Speicher aufgezeichnet sind, zu diesem Computer (20) fern zu laden.

7. Vorrichtung (1) nach einem der vorhergehenden Ansprüche, **dadurch gekennzeichnet, dass** die Mittel (3, 4, 6, 7, 8, 5), die in der Lage sind, der Vorrichtung (1) Befehle zu erteilen, Druckknöpfe umfassen.

8. Vorrichtung (1) nach Anspruch 7, **dadurch gekennzeichnet, dass** die Druckknöpfe (3, 4, 6, 7, 8, 5) Mittel umfassen, die in der Lage sind, der Vorrichtung (1) erst nach mehrfachem kurzem Drücken Befehle zu erteilen.

9. Vorrichtung (1) nach einem der vorhergehenden Ansprüche, **dadurch gekennzeichnet, dass** die Mittel (3, 4, 6, 7, 8, 5), die in der Lage sind, der Vorrichtung (1) Befehle zu erteilen, Spracherkennungsmittel umfassen.

10. Vorrichtung (1) nach einem der vorhergehenden Ansprüche, **dadurch gekennzeichnet, dass** die Mittel, die in der Lage sind, Signale (9) zu entsenden, Mittel umfassen, die in der Lage sind, Töne zu entsenden.

11. Vorrichtung (1) nach einem der vorhergehenden Ansprüche, **dadurch gekennzeichnet, dass** die Mittel, die in der Lage sind, Signale (9) zu entsenden, Mittel umfassen, die in der Lage sind, Lichtsignale zu entsenden.

12. Vorrichtung (1) nach einem der vorhergehenden Ansprüche, **dadurch gekennzeichnet, dass** die Mittel, die in der Lage sind, Signale (9) zu entsenden, Sprachsynthesemittel umfassen.

13. Vorrichtung (1) nach einem der vorhergehenden Ansprüche, **dadurch gekennzeichnet, dass** die Mittel (2, 6, 7, 8), die in der Lage sind, eine Auswahl eines Ereignistyps oder des Wertes eines Merkmals eines Ereignisses zu steuern, einen Anzeigebildschirm (2) umfassen.

14. Vorrichtung (1) nach einem der vorhergehenden Ansprüche, **dadurch gekennzeichnet, dass** die Mittel (2, 6, 7, 8), die in der Lage sind, eine Auswahl eines Ereignistyps oder des Wertes eines Merkmals eines Ereignisses zu steuern, Sprachsynthesemittel umfassen.

15. Methode zum Sammeln von Daten einer Reihe klinischer Versuche oder menschlicher Verhaltensanalysen, wobei erste Daten eine Gesamtheit von aufzuzeichnenden Ereignistypen, eine Gesamtheit von möglichen Werten eines oder mehrerer Merkmale, die jedem dieser Ereignistypen zugeordnet sind, und eine Gesamtheit von besonderen Aktionen definieren, die zu bestimmten Zeitpunkten durchzuführen sind, wobei diese ersten Daten von einem Zentrum für klinische Forschung oder menschliche Verhaltensanalyse (16) ausgearbeitet wurden, **dadurch gekennzeichnet, dass** sie die folgenden Schritte umfasst:
- Übertragen (18) dieser ersten Daten über lokale Zentren (17) zu den Computern (20) der Ärzte oder Mitarbeiter;
- Fernladen (21) dieser ersten Daten zu Vorrichtungen (1) nach einem der Ansprüche 1 bis 14;
- Aufzeichnen zweiter Daten, die in Datumsangaben und Uhrzeiten zu Beginn und Ende oder Eintreten der beobachteten Ereignisse bestehen, mit ihren Typen und dem Wert ihrer Merkmale, durch Vorrichtungen nach einem der Ansprüche 1 bis 14;
- Fernladen (22) dieser zweiten aufgezeichneten Daten zu den Computern (20) der Ärzte oder Mitarbeiter;
- Übertragen (19) dieser zweiten aufgezeichneten Daten über lokale Zentren (17) zum Zentrum für klinische Forschung oder menschliche Verhaltensanalyse (16);
- Bearbeiten dieser zweiten Daten durch das Zentrum für klinische Forschung und menschliche Verhaltensanalyse (16).
